# EUROPÄISCHE PATENTSCHRIFT

(11) **EP 2 856 610 B1**
(45) Veröffentlichungstag und Bekanntmachung des Hinweises auf die Patenterteilung: **27.04.2022**
(21) Anmeldenummer: 13721956.4
(22) Anmeldetag: 06.05.2013
(51) Int. Cl.: H02K 1/27, H02K 7/00, B60L 3/00, B60L 50/16

(54) **ROTOR FÜR EINEN ELEKTROMOTOR**
ROTOR FOR AN ELECTRIC MOTOR
ROTOR POUR MOTEUR ELECTRIQUE

(30) Priorität: 02.06.2012 DE 102012010993
(43) Veröffentlichungstag der Anmeldung: 08.04.2015
(73) Patentinhaber: Volkswagen Aktiengesellschaft, 38440 Wolfsburg (DE)
(72) Erfinder: BUDDE, Thomas, 97078 Würzburg (DE); TIMM, Eike Hermann, 38108 Braunschweig (DE)
(86) Internationale Anmeldenummer: PCT/EP2013/059420
(87) Internationale Veröffentlichungsnummer: WO 2013/178436

(56) Entgegenhaltungen:
- EP-A2- 2 293 421
- JP-A- 2004 104 962
- US-A1- 2001 043 020
- US-A1- 2006 170 301
- US-A1- 2010 253 169

## Beschreibung

Die Erfindung betrifft einen Rotor für einen Elektromotor gemäß dem Oberbegriff von Patentanspruch 1. Sie betrifft auch einen Elektromotor mit einem solchen Rotor und ein Kraftfahrzeug mit einem solchen Elektromotor.

Gattungsgemäße Rotoren mit den Merkmalen vom Oberbegriff des Patentanspruchs 1 sind aus der DE 11 2008 001 333 T5 und auch aus der US 5,962,944 bekannt.

Derartige Rotoren sind Bestandteil von sogenannten IPM-Motoren (IPM steht für engl.: Interior Permanent Magnet Motors, deutsch: Motoren mit innen angebrachten Permanentmagneten). Diese Elektromotoren können ein vergleichsweise hohes Drehmoment bzw. eine vergleichsweise hohe Effizienz liefern und werden daher beispielsweise als Antriebsmotoren für Hybridfahrzeuge und Elektrofahrzeuge, in denen eine hohe Antriebsleistung abgegeben werden muss, bevorzugt verwendet.

Insbesondere in der DE 11 2008 001 333 T5 wird auch das Problem beschrieben, dass bedingt durch den in den Statorwicklungen eines IPM-Motors fließenden Strom auf jeden Permanentmagneten (im Weiteren nur Magnet) ein umgekehrtes Magnetfeld (Gegenfeld) wirkt.

Ist solch ein Gegenfeld auch nur für Bruchteile einer Sekunde zu groß, kann dies zu einer unumkehrbaren Entmagnetisierung der Magneten und damit zu einem Ausfall des IPM-Motors führen.

Man hat bislang versucht, dem erzeugten Gegenfeld eine hohe Koerzitivfeldstärke bzw. Koerzitivkraft der Magneten entgegen zu setzen.

Durch Legierung der Magnete mit Seltenerde-Elementen wie beispielsweise Dysprosium (Dy) und/oder Neodym (Nd) versucht man, die Koerzitivkraft der Magnete und auch die TemperaturBeständigkeit zu steigern. Insbesondere beim Einsatz in (Parallel)Hybridfahrzeugen, wo die Elektromotoren (Elektromaschinen) sandwichartig zwischen den "Heizquellen" Verbrennungsmotor und Getriebe angeordnet sind, werden die Magnete magnetisch wie thermisch hoch belastet.

Allerdings hat in der letzten Zeit eine wahre Preisexplosion auf dem Gebiet der Seltenerden stattgefunden, was zu einem drastischen Anstieg der Herstellungskosten für IPM-taugliche Magnete geführt hat.

Man ist bemüht, diesen Kostenfaktor auszuhebeln. Die DE 11 2008 001 333 T5 sieht hierfür als geeignetes Mittel vor, die Magnete in eine Mehrzahl magnetischer Bereiche aufzuteilen, welche unterschiedliche Koerzitivkräfte aufweisen.

Der Bereich mit der höchsten Koerzitivkraft (also mit dem höchsten Seltenerde-Anteil) wird dabei so positioniert, dass dieser der höchsten Gegenfeld-Belastung ausgesetzt ist. Bei den Bereichen mit weniger Gegenfeldbelastung wird der Seltenerde-Anteil entsprechend gesenkt. Auf diese Weise werden die teuren Seltenerde-Elemente also nur dort vermehrt eingesetzt, wo sie wirklich gebraucht werden.

Weitere gattungsgemäße Elektromotoren sind aus der US 2010/253169 A1, der EP 2 293 421 A2, der JP 2004 104962 A, der US 2001/043020 A1 und der US 2006/170301 A1 bekannt. Ausgehend von der oben geschilderten Problematik liegt der vorliegenden Erfindung die Aufgabe zu Grunde, einen Rotor für einen Elektromotor mit den Merkmalen vom Oberbegriff des Patentanspruchs 1 derart weiterzubilden, dass eine weitere Kostenreduktion möglich ist. Diese Aufgabe wird mit den kennzeichnenden Merkmalen von Patentanspruch 1 gelöst. Vorteilhafte Ausführungen beziehungsweise Weiterbildungen der Erfindung sind den jeweiligen Unteransprüchen entnehmbar.

Die Erfindung geht daher aus von einem Rotor für einen Elektromotor, mit einer Drehachse und mehreren eingebetteten Dauermagneten, von denen in einer durch die Drehachse definierten axialen Stirnansicht auf den Rotor betrachtet wenigstens zwei jeweils derart ausgerichtet sind, dass jeweils ein in einer Längsrichtung der Dauermagneten betrachtetes Ende dem radialen Außenumfang des Rotors radial gesehen näher liegt als ein in der Längsrichtung der Dauermagneten betrachtet gegenüberliegendes Ende.

Erfindungsgemäß ist vorgesehen, dass in der Stirnansicht auf den Rotor betrachtet das dem radialen Außenumfang des Rotors radial gesehen näher liegende Ende breiter ist als das in der Längsrichtung der Dauermagneten betrachtete gegenüberliegende andere Ende. Genauer gesagt wird vorgeschlagen, dass in einer Stirnansicht auf den Rotor betrachtet die Dauermagneten jeweils an dem gegenüberliegenden Ende eine erste Breite und an dem dem Umfang des Rotors radial näher liegenden Ende eine zweite Breite aufweisen, wobei die zweite Breite größer ist als die erste Breite, und wobei die Dauermagneten in einer Stirnansicht auf den Rotor betrachtet jeweils von der ersten Breite zur zweiten Breite wenigstens eine stufenartige Verbreiterung aufweisen.

Eine solche Verbreiterung bzw. Verdickung erzielt eine ähnliche Wirkung wie eine Erhöhung bzw. Zugabe schwerer Selten Erden in den Magneten. Dazu wird bei einer gegebenenfalls zusätzlich vorgenommenen Legierung von Magnetsegmenten mit Selten Erden eine fertigungstaugliche Zuordnung der höher legierten Magnet-Seite geschaffen und somit eine verdrehte Montage ausgeschlossen.

Das dem radialen Außenumfang des Rotors radial gesehen näher liegende, verbreiterte Ende wies (bei gleichem Werkstoff wie das andere Ende) eine deutlich höhere "Belastbarkeit" auf. Die Belastbarkeit stieg zum einen hinsichtlich des Gegenfeldes, zum anderen auch hinsichtlich der auftretenden Temperatur. Insofern konnte der Einsatz/Zusatz von teuren Seltenerde-Elementen verringert werden.

Gemäß einer ersten vorteilhaften Weiterbildung der Erfindung ist vorgesehen, dass in einer Stirnansicht auf den Rotor betrachtet die Verbreiterung des Dauermagneten durch wenigstens eine einer Drehachse des Rotors zugewandten Materialverbreiterung gebildet ist.

Eine solche Weiterbildung ist insbesondere bei sehr beengten Bauraumverhältnissen von Vorteil. Die Magnete können dadurch sehr nah am Rotorumfang positioniert werden, so dass auch bei geringem Abstand zwischen Rotorumfang und Rotor-Innendurchmesser (für die Drehachse) eine Einbettung der Magneten leichter möglich ist.

Sind die Bauraumverhältnisse etwas großzügiger bemessen, so kann alternativ in einer Stirnansicht auf den Rotor betrachtet die Verbreiterung des Dauermagneten durch wenigstens eine einer Drehachse des Rotors abgewandten Materialverbreiterung gebildet sein. Dies hat den Vorteil, dass die Materialverbreiterung noch besser zum Gegenfeld ausgerichtet werden kann.

Als Kompromisslösung zwischen den oben genannten ist auch möglich, dass in einer Stirnansicht auf den Rotor betrachtet die Verbreiterung des Dauermagneten durch wenigstens eine einer Drehachse des Rotors zugewandten und durch wenigstens eine einer Drehachse des Rotors abgewandten Materialverbreiterung gebildet ist.

Erfindungsgemäß ist in einer durch die Drehachse definierten axialen Stirnansicht auf den Rotor betrachtet die Verbreiterungen des Dauermagneten durch mehrere Materialverbreiterungen gebildet, wobei die Materialverbreiterungen ausgehend vom dem dem radialen Außenumfang des Rotors in der Längsrichtung der Dauermagneten radial fernliegenden Ende in Richtung des radialen Außenumfangs des Rotors stufenartig zunehmen, so dass für die Dauermagneten beidseitig eine treppenartige Form ergibt.

Schließlich ist gemäß einem Ausführungsbeispiel der Erfindung auch noch denkbar, jeden Dauermagneten mehrere Bereiche mit unterschiedlicher Koerzitivkraft aufweisen zu lassen, wobei das dem radialen Außenumfang des Rotors radial gesehen näher liegende Ende eine höhere Koerzitivkraft aufweist als das andere Ende. Diese Maßnahme kann ergänzend zu den vorgenannten Maßnahmen vorgesehen sein und unterstützt den gewünschten Effekt.

Ein Ausführungsbeispiel betrifft aber auch einen Elektromotor, insbesondere IPM-Motor, welcher mit einem erfindungsgemäßen Rotor ausgestattet ist. Ein solcher Motor ist bei hoher Leistungsfähigkeit sehr robust und zuverlässig, wobei die Herstellkosten verringert werden können.

Schließlich schlägt ein Ausführungsbeispiel auch noch vor, ein Kraftfahrzeug, insbesondere ein Hybrid-oder Elektrofahrzeug mit wenigstens einem gemäß einem Ausführungsbeispiel mit dem erfindungsgemäß ausgebildeten Rotor versehenen Elektromotor auszustatten. Ein Kraftfahrzeug kann durch einen solchen Motor zuverlässig angetrieben werden. Ausführungsbeispiele der Erfindung sind in den Zeichnungen dargestellt und werden in der nachfolgenden Beschreibung näher erläutert. Dabei beziehen sich gleiche Bezugszeichen auf gleiche, vergleichbare oder funktional gleiche Bauteile, wobei entsprechende oder vergleichbare Eigenschaften und Vorteile erreicht werden, auch wenn eine wiederholte Beschreibung weggelassen ist.

Es zeigen, jeweils schematisch
Fig. 1 Teil eines Elektromotors in einer Stirnansicht nach einem Ausführungsbeispiel,
Fig. 2 vergrößerte Einzeldarstellung eines Dauermagneten gemäß Fig. 1,
Fig. 3 Teil eines Elektromotors gemäß einem zweiten Ausführungsbeispiel in einer Stirnansicht,
Fig. 4 vergrößerte Einzeldarstellung eines Dauermagneten gemäß Fig. 3,
Fig. 5 Teil eines Elektromotors gemäß einem dritten Ausführungsbeispiel in einer Stirnansicht,
Fig. 6 vergrößerte Einzeldarstellung eines Dauermagneten gemäß Fig. 5,
Fig. 7 Teil eines Elektromotors mit einem erfindungsgemäßen Rotor in einer Stirnansicht,
Fig. 8 vergrößerte Einzeldarstellung eines Dauermagneten eines erfindungsgemäßen Rotor gemäß Fig. 7 und
Fig. 9 ein Hybridfahrzeug mit einem gemäß einem Ausführungsbeispiel mit dem erfindungsgemäß ausgebildeten Rotor versehenen Elektromotor.

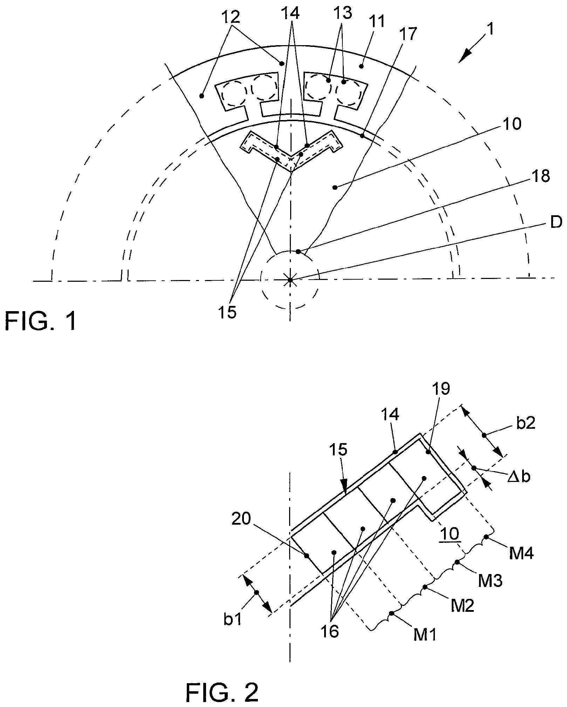

Zunächst wird auf die Figuren 1 und 2 Bezug genommen. Darin ist ein Elektromotor 1 teilweise dargestellt. Der Elektromotor 1 weist einen Stator 11 mit nach innen gerichteten Statorzähnen 12 und Wicklungen 13 (gestrichelt angedeutet) auf. Innerhalb des Stators 11 ist ein Rotor 10 um eine Drehachse D verdrehbar gelagert.

In Montageöffnungen 14 des Rotors 10 ist eine Vielzahl von paarweise angeordneten Dauermagneten 15 eingesteckt. Die Dauermagneten 15 sind dabei V-förmig ausgerichtet, wobei eine Spitze des V zu einem Rotor-Innendurchmesser 18 und die Enden des V zu einem Rotorumfang 17 weisen (sogenannte V-Anordnung).

Die Montageöffnungen 14 sind im Ausführungsbeispiel als miteinander verbunden dargestellt. Es kann für jeden Dauermagneten 15 jedoch auch eine separate Montageöffnung vorgesehen sein.

In einem Ausführungsbeispiel besteht der Dauermagneten 15 aus einer Mehrzahl von miteinander befestigten, beispielsweise über eine Epoxidharzschicht miteinander verklebten Magnetsegmenten 16, wobei jeder Dauermagnet 15 so positioniert ist, dass ein Ende 19 dem Rotorumfang 17 radial näher liegt als ein gegenüberliegendes Ende 20. Jedes Magnetsegment 16 ist aus gesintertem Material und hat in der gezeigten Stirnansicht einen in etwa rechteckigen bis quadratischen Querschnitt und in einer Draufsicht einen länglichen, in etwa rechteckigen Umriss.

Erfindungsgemäß weisen die Dauermagneten 15 an ihrem einen Ende 20 eine Breite b1 und an dem gegenüberliegenden anderen Ende 19 eine Breite b2 auf, wobei die Breite b2 größer ist als die Breite b1. Hieraus ergibt sich eine Verbreiterung Δb. Die Verbreiterung Δb ist dabei nach einem Ausführungsbeispiel der Drehachse D zugewandt. Das Ende 19 bzw. der Bereich des Dauermagneten 15 mit der Breite b2 weist eine deutlich höhere Koerzitivkraft auf, als das gegenüberliegende Ende 20 mit geringerer Breite b1.

Ergänzend kann vorgesehen sein, die Magnetsegmente 16 materialbedingt mit einer unterschiedlichen Koerzitivkraft auszubilden. So können beispielsweise vier magnetische Bereiche M1, M2, M3 und M4 vorgesehen sein, wobei den Magnetsegmenten 16 im Bereich M1 ein bestimmter Anteil an Seltenerde-Elementen (bspw. Dysprosium und Neodym) zugegeben wurde und dieser Anteil für die Bereiche M2 bis M4 schrittweise erhöht wird.

Auch ist eine Erhöhung innerhalb eines jeden der Bereiche M1 bis M4 denkbar.

Bei einer ergänzenden Ausbildung der Dauermagnete 15 mit den Bereichen M1 bis M4 können die Verbreiterungen Δb zudem als Montageerleichterung (Verwechslungsschutz) genutzt werden.

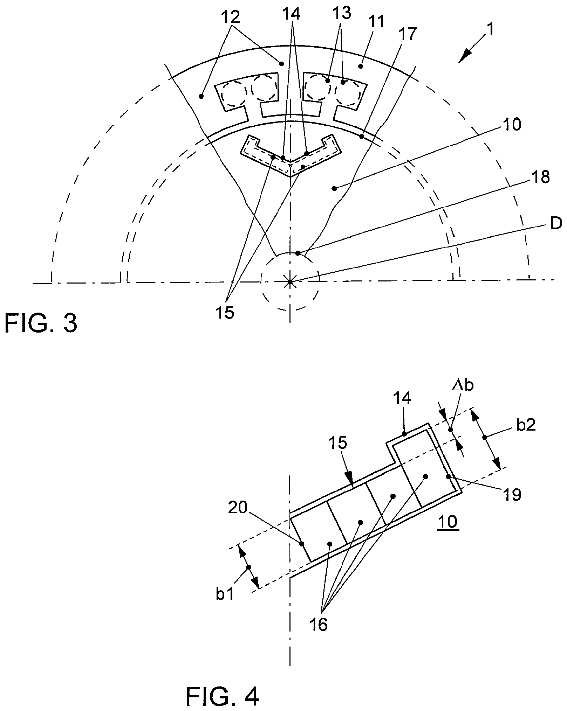

In den Figuren 3 und 4 ist ein zweites Ausführungsbeispiel für einen Elektromotor 1 dargestellt. Im Unterschied zum ersten Ausführungsbeispiel sind die Dauermagneten 15 mit einer Verbreiterung Δb versehen, welche der Drehachse D des Rotors 10 abgewandt sind.

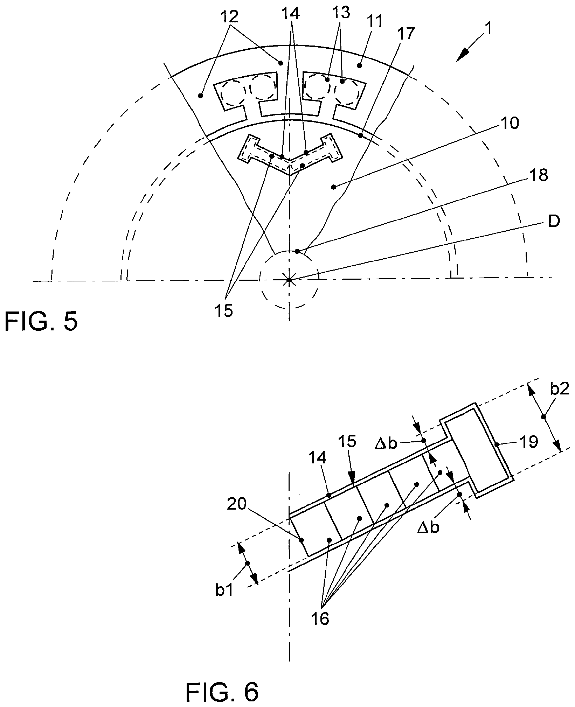

Ein drittes Ausführungsbeispiel zeigen die Figuren 5 und 6. Im Unterschied zu den vorangegangenen Ausführungsbeispielen wird hierbei ein "Mittelweg" eingeschlagen. Jeder Dauermagnet 15 weist im Bereich seines Endes 19 zwei Verbreiterungen Δb auf, die der Drehachse D des Rotors 10 einmal zu- und einmal abgewandt sind.

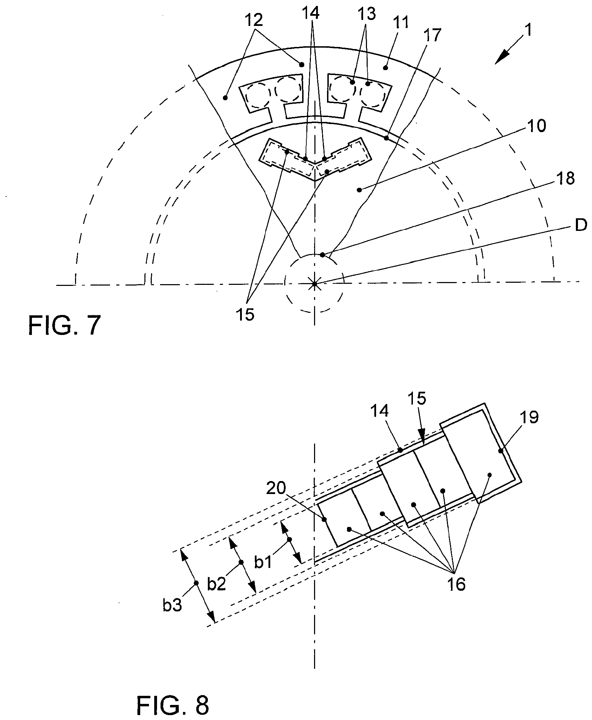

Schließlich ist in den Figuren 7 und 8 ein erfindungsgemäßer Rotor dargestellt, bei dem die Dauermagneten 15 mehrere zunehmende Breiten b1 bis b3 aufweisen, so dass sich beidseitig der Dauermagneten 15 eine stufen- und treppenartige Form ergibt.

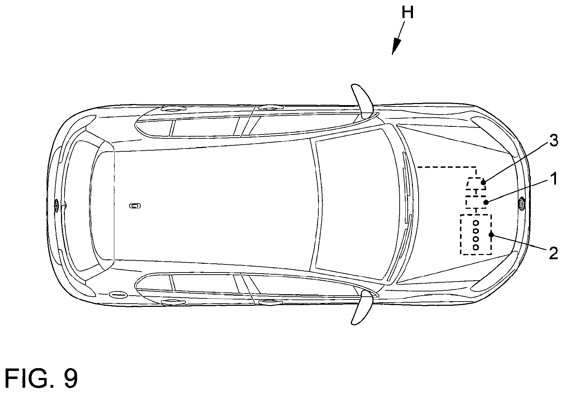

In der Fig. 9 ist ein Hybridfahrzeug H dargestellt, in das ein gemäß einem Ausführungsbeispiel mit dem erfindungsgemäß ausgebildeten Rotor versehener Elektromotor 1 zwischen einem Verbrennungsmotor 2 und einem Getriebe 3 verbaut ist. Dabei ist ohne weiteres nachvollziehbar, dass der Elektromotor 1 und damit auch die in diesem verbauten Dauermagnete 15 einer hohen Wärmeeinwirkung ausgesetzt sind.

Die Erfindung ist nicht auf die obigen Ausführungsbeispiele beschränkt. Diese wurden nur zur allgemeinen Erläuterung des Kerngedankens der Erfindung herangezogen. Die Erfindung kann im Rahmen ihres Schutzumfangs auch andere als die zuvor beschriebenen Ausführungsbeispiele haben. Hierbei kann sie insbesondere auch solche Merkmale aufweisen, die eine beanspruchte Kombination der Einzelmerkmale der beigefügten Ansprüche darstellen.

### Bezugszeichenliste

- 1: Elektromotor
- 2: Verbrennungsmotor
- 3: Getriebe
- 10: Rotor
- 11: Stator
- 12: Statorzähne
- 13: Wicklungen
- 14: Montageöffnungen
- 15: Dauermagnete
- 16: Magnetsegmente
- 17: Rotorumfang
- 18: Rotor-Innendurchmesser
- 19: Ende des Dauermagneten
- 20: Ende des Dauermagneten

- b1-b3: Breiten der Dauermagneten in einer Stirnansicht auf den Rotor
- Δb: Verbreiterung
- D: Drehachse
- H: Hybridfahrzeug
- M1-M4: Magnetische Bereiche mit unterschiedlicher Koerzitivkraft

## Patentansprüche

1. Rotor (10) für einen Elektromotor (1), mit einer Drehachse (D) und mehreren eingebetteten Dauermagneten (15)
von denen in einer durch die Drehachse (D) definierten axialen Stirnansicht auf den Rotor (10) betrachtet wenigstens zwei Dauermagneten (15) jeweils derart ausgerichtet sind, dass jeweils ein in einer Längsrichtung der Dauermagneten (15) betrachtetes Ende (19) der Dauermagneten (15) einem radialen Außenumfang (17) des Rotors (10) radial gesehen näher liegt als ein in der Längsrichtung der Dauermagneten (15) betrachtet gegenüberliegendes Ende (20) der Dauermagneten (15), **dadurch gekennzeichnet,**
**dass** in der Stirnansicht auf den Rotor (10) betrachtet die Dauermagneten (15) jeweils an dem in der Längsrichtung der Dauermagneten (15) betrachtet gegenüberliegenden Ende (20) eine erste Breite (b1) und an dem dem radialen Außenumfang (17) des Rotors (10) radial gesehen näher liegenden Ende (19) eine zweite Breite (b2) aufweisen, wobei die zweite Breite (b2) größer ist als die erste Breite (b1), und
wobei die Dauermagneten (15) in der Stirnansicht auf den Rotor (10) betrachtet jeweils von der ersten Breite (b1) zur zweiten Breite (b2) stufenartige Verbreiterungen (Δb) aufweisen, wobei in der Stirnansicht auf den Rotor (10) betrachtet die Verbreiterungen (Δb) der Dauermagneten (15) durch Materialverbreiterungen b1, b2 und b3 gebildet sind, wobei b1, b2 und b3 Breiten der Dauermagneten (15) in der Stirnansicht auf den Rotor (10) darstellen, wobei die Materialverbreiterungen b1, b2 und b3 ausgehend von dem dem radialen Außenumfang (17) des Rotors (10) in der Längsrichtung der Dauermagneten (15) radial fernliegenden Ende (20) in Richtung des radialen Außenumfangs (17) des Rotors (10) stufenartig zunehmen, so dass für die Dauermagneten (15) beidseitig eine treppenartige Form ergibt.

2. Rotor (10) für einen Elektromotor (1) nach Anspruch 1, **dadurch gekennzeichnet, dass** in einer Stirnansicht auf den Rotor (10) betrachtet die Verbreiterungen (Δb) des Dauermagneten (15) durch die einer Drehachse (D) des Rotors (10) zugewandten Materialverbreiterungen b1, b2 und b3 gebildet sind.

3. Rotor (10) für einen Elektromotor (1) nach Anspruch 1, **dadurch gekennzeichnet, dass** in einer Stirnansicht auf den Rotor (10) betrachtet die Verbreiterungen (Δb) des Dauermagneten (15) durch die einer Drehachse (D) des Rotors (10) abgewandten Materialverbreiterungen b1, b2 und b3 gebildet sind.

4. Rotor (10) für einen Elektromotor (1) nach einem der vorhergehenden Ansprüche, **dadurch gekennzeichnet, dass** jeder Dauermagnet (15) mehrere Bereiche (M1-M4) mit unterschiedlicher Koerzitivkraft aufweist, wobei das dem radialen Außenumfang (17) des Rotors (10) radial gesehen näher liegende Ende (19) eine höhere Koerzitivkraft aufweist als das radial fernliegende andere Ende (20).

5. Elektromotor (1) mit einem Rotor (10) nach einem der vorhergehenden Ansprüche.

6. Kraftfahrzeug (H) mit wenigstens einem Elektromotor (1) nach Anspruch 5.

## Claims

1. Rotor (10) for an electric motor (1), with an axis of rotation (D) and a plurality of embedded permanent magnets (15), of which, viewed in an axial frontal view of the rotor (10) defined by the axis of rotation (D), at least two permanent magnets (15) are each aligned in such a manner that in each case one end (19) of the permanent magnets (15), viewed in a longitudinal direction of the permanent magnets (15), lies closer to a radial outer circumference (17) of the rotor (10) than does an opposite end (20) of the permanent magnets (15) viewed in the longitudinal direction of the permanent magnets (15), **characterized in that,** viewed in the frontal view of the rotor (10), the permanent magnets (15) each have a first width (b1) at the end (20) opposite as viewed in the longitudinal direction of the permanent magnets (15) and a second width (b2) at the end (19) closer to the radial outer circumference (17) of the rotor (10) as viewed radially, wherein the second width (b2) is larger than the first width (b1), and wherein the permanent magnets (15) have step-like widenings (Δb) in each case from the first width (b1) to the second width (b2), as viewed in the frontal view of the rotor (10), wherein the widenings (Δb) of the permanent magnets (15) are formed by material widenings b1, b2 and b3, where b1, b2 and b3 represent widths of the permanent magnets (15) in the front view of the rotor (10), wherein the material widenings b1, b2 and b3, starting from the end (20) that is radially remote from the radial outer circumference (17) of the rotor (10) in the longitudinal direction of the permanent magnets (15), increase in a step-like manner in the direction of the radial outer circumference (17) of the rotor (10), such that a stair-like shape results for the permanent magnets (15) on both sides.

2. Rotor (10) for an electric motor (1) according to Claim 1, **characterized in that,** viewed in a frontal view of the rotor (10), the widenings (Δb) of the permanent magnet (15) are formed by the material widenings b1, b2 and b3 facing an axis of rotation (D) of the rotor (10).

3. Rotor (10) for an electric motor (1) according to Claim 1, **characterized in that,** viewed in a frontal view of the rotor (10), the widenings (Δb) of the permanent magnet (15) are formed by the material widenings b1, b2 and b3 facing away from an axis of rotation (D) of the rotor (10).

4. Rotor (10) for an electric motor (1) according to any one of the preceding claims, **characterized in that** each permanent magnet (15) has a plurality of regions (M1-M4) with varying coercive force, wherein the end (19) that is closer to the radial outer circumference (17) of the rotor (10), as viewed radially, has a greater coercive force than the other end (20) that is radially remote from the radial outer circumference.

5. Electric motor (1) with a rotor (10) according to any one of the preceding claims.

6. Motor vehicle (H) with at least one electric motor (1) according to Claim 5.

## Revendications

1. Rotor (10) pour un moteur électrique (1), comprenant un axe de rotation (D) et plusieurs aimants permanents (15) intégrés, dont, vus dans une vue frontale axiale sur le rotor (10) définie par l'axe de rotation (D), au moins deux aimants permanents (15) sont alignés de telle façon que respectivement une extrémité (19) des aimants permanents (15), vue dans une direction longitudinale de l'aimant permanent (15), soit plus proche, vue radialement, d'une circonférence extérieure radiale (17) du rotor (10) qu'une extrémité opposée (20) des aimants permanents (15), vue dans la direction longitudinale des aimants permanents (15), **caractérisé en ce que**, vus dans la vue frontale sur le rotor (10), les aimants permanents (15) présentent respectivement une première largeur (b1) à l'extrémité opposée (20), vue dans la direction longitudinale des aimants permanents (15) et une deuxième largeur (b2), à l'extrémité (19) plus proche de la circonférence extérieure radiale (17) du rotor (10), vue radialement, la deuxième largeur (b2) étant supérieure à la première largeur (b1) et les aimants permanents (15), vus de la vue frontale sur le rotor (10), présentant respectivement de la première largeur (b1) vers la deuxième largeur (b2) des élargissements en forme de marches (Δb), les élargissements (Δb) des aimants permanents (15), vus de la vue frontale sur le rotor (10), étant formés par des élargissements de matériau b1, b2 et b3, b1, b2 et b3 représentant des largeurs des aimants permanents (15) dans la vue frontale sur le rotor (10), les élargissements de matériau b1, b2 et b3, partant de l'extrémité (20) radialement éloignée, dans la direction longitudinale des aimants permanents (15), de la circonférence extérieure radiale (17) du rotor (10), augmentant par palier dans la direction de la circonférence extérieure radiale (17) du rotor (10), de sorte qu'une forme d'escalier résulte des deux côtés pour les aimants permanents (15).

2. Rotor (10) pour un moteur électrique (1) selon la revendication 1, **caractérisé en ce que** les élargissements (Δb) des aimants permanents (15), vus dans une vue frontale sur le rotor (10), sont formés par les élargissements de matériau b1, b2 et b3 faisant face à un axe de rotation (D) du rotor (10).

3. Rotor (10) pour un moteur électrique (19) selon la revendication 1, **caractérisé en ce que** les élargissements (Δb) des aimants permanents (15), vus dans une vue frontale sur le rotor (10), sont formés par les élargissements de matériau b1, b2 et b3 opposés à un axe de rotation (D) du rotor (10).

4. Rotor (10) pour un moteur électrique (1) selon l'une quelconque des revendications précédentes, **caractérisé en ce que** chaque aimant permanent (15) présente plusieurs zones (M1-M4) ayant une force coercitive différente, l'extrémité (19) plus proche, vue radialement, de la circonférence extérieure radiale (17) du rotor (10) présentant une force coercitive supérieure à celle de l'autre extrémité (20) radialement éloignée.

5. Moteur électrique (1) comprenant un rotor (10) selon l'une quelconque des revendications précédentes.

6. Véhicule automobile (H) comprenant au moins un moteur électrique (1) selon la revendication 5.
